# EUROPEAN PATENT APPLICATION

(11) **EP 4 528 863 A1**
(43) Date of publication of application: **26.03.2025**
(21) Application number: 22947131.3
(22) Date of filing: 20.06.2022
(51) Int. Cl.: H01M 10/04, H01M 50/46, H01M 50/406

(54) **ELECTROCHEMICAL DEVICE AND ELECTRIC DEVICE**

(71) Applicant: Ningde Amperex Technology Ltd., Ningde City, Fujian Province 352100 (CN)
(72) Inventor: GONG, Qiqi, Ningde City, Fujian Province 352100 (CN); JIANG, Haibin, Ningde City, Fujian Province 352100 (CN); YAN, Qi, Ningde City, Fujian Province 352100 (CN); LI, Fangfang, Ningde City, Fujian Province 352100 (CN)
(74) Representative: Icosa
(86) International application number: PCT/CN2022/099893
(87) International publication number: WO 2023/245350

(57) **Abstract**

An electrochemical device and an electric device are disclosed, where the electrochemical device includes a housing and an electrode assembly. The electrode assembly is disposed within the housing and includes a first electrode plate, a second electrode plate, and a separator disposed between the first electrode plate and the second electrode plate. Along the first direction, a projection of the second electrode plate is within a projection of the first electrode plate, the projection of the first electrode plate is within a projection of the separator, and the projection of the separator is within a projection of the accommodating space. Along a direction perpendicular to the first direction, the separator extends beyond the first electrode plate, and an end of a portion of the separator extending beyond the first electrode plate, together with the housing form a first region. This can prevent the separator from entering a packaging region of the housing, thereby reducing the impact of the separator on housing packaging and improving a yield rate of the electrochemical device.

## Description

### TECHNICAL FIELD

This application relates to the field of battery cell technologies, and specifically, to an electrochemical device and an electric device.

### BACKGROUND

Currently, to meet the safety requirements of the electrode assembly, the separator in the electrode assembly is generally made longer to extend beyond a certain distance. When the electrode assembly is placed into the housing for packaging, there is a risk that the ends of part of the separators may enter the packaging region of the housing, which could potentially lead to packaging failure of the housing.

### SUMMARY

In view of the above situation, it is necessary to provide an electrochemical device to reduce the impact of the separator on housing packaging.

The embodiments of this application provide an electrochemical device, including a housing and an electrode assembly. The housing includes a first housing and a second housing, where the first housing and the second housing are connected to each other to form an accommodating space. The electrode assembly is disposed within the accommodating space, where the electrode assembly includes a first electrode plate, a second electrode plate, and a separator disposed between the first electrode plate and the second electrode plate, the first electrode plate, the separator, and the second electrode plate are sequentially stacked along a first direction, the first direction is a thickness direction of the housing, and the first housing and the second housing are arranged opposite to each other along the first direction. Along the first direction, a projection of the second electrode plate is within a projection of the first electrode plate, the projection of the first electrode plate is within a projection of the separator, and the projection of the separator is within a projection of the accommodating space. Along a direction perpendicular to the first direction, the separator extends beyond the first electrode plate, and an end of a portion of the separator extending beyond the first electrode plate, together with the first housing and the second housing, enclose a first region.

In the above electrochemical device, the separator is disposed within the accommodating space of the housing, and the end of the portion of the separator extending beyond the first electrode plate and the second electrode plate, together with the first housing and the second housing, enclose the first region. This can prevent the separator from entering the connection region of the first housing and the second housing, reducing the impact of the separator on housing packaging, and improving the yield rate of the electrochemical device.

In some embodiments of this application, along the first direction, a projection of the first region is within the projection of the separator, and a length of the first region (that is, a maximum length of the first region along the first direction) is L1, where L1 > 0. Along the direction perpendicular to the first direction, a width of the first region (that is, a maximum width of the first region along the direction perpendicular to the first direction) is W1, where W1 > 0.

In some embodiments of this application, along the first direction, starting from a connection region of the first housing and the second housing and extending along a direction away from the connection region, the width of the first region gradually decreases; and along the direction perpendicular to the first direction, a maximum length by which the separator extends beyond the first electrode plate is W, where W > 2 * W1.

In some embodiments of this application, along the first direction, a length of the accommodating space is H, where H ≥ 2 * L1.

In some embodiments of this application, along the direction perpendicular to the first direction, a minimum distance between the first region and the first electrode plate is D, where D ≥ 0.45 mm, which can reduce a risk of a short circuit between the first electrode plate and the second electrode plate, improving the safety performance of the electrode assembly.

In some embodiments of this application, along the direction perpendicular to the first direction, the separator is connected to the first housing and/or the second housing, which can reduce a risk of displacement of the electrode assembly relative to the housing, improving the anti-vibration performance of the electrochemical device.

In some embodiments of this application, the electrochemical device further includes a bonding member, where one end of the bonding member is connected to one side of the electrode assembly along the first direction, and an opposite end of the bonding member is connected to another side of the electrode assembly along the first direction. The bonding member can be configured to reinforce the electrode assembly, reducing a risk of relative displacement between the first electrode plate, the second electrode plate, and the separator, and improving the anti-vibration performance of the electrochemical device. Along the direction perpendicular to the first direction, an end of the separator abuts against the bonding member. Along the first direction, a projection of the bonding member is within the projection of the accommodating space. The bonding member, together with the first housing and the second housing, enclose a second region, and the second region is within the first region. This can reduce the impact of the bonding member on the housing packaging, improving the yield rate of the electrochemical device.

In some embodiments of this application, along the direction perpendicular to the first direction, a projection of the second region is within the projection of the bonding member, and part of the bonding members abut against the first housing and/or the second housing. This can reduce the risk of displacement of the electrode assembly relative to the housing, improving the anti-vibration performance of the electrochemical device.

In some embodiments of this application, the first electrode plate, the separator, and the second electrode plate are each provided in plurality, and at least one separator is disposed between any adjacent first electrode plate and second electrode plate. Along the first direction, at each of two sides of the electrode assembly is the first electrode plate, and two ends of the bonding member are respectively connected to the first electrode plates at the two sides of the electrode assembly. At each of two sides of the electrode assembly is the first electrode plate, which allows ion penetration at any position on the second electrode plate, improving the energy density of the electrochemical device.

An embodiment of this application further provides an electric device including the electrochemical device according to any one of the foregoing embodiments. In the above electrochemical device, the separator is disposed within the accommodating space of the housing, and the end of the portion of the separator extending beyond the first electrode plate and the second electrode plate, together with the first housing and the second housing, enclose the first region. This can prevent the separator from entering the connection region of the first housing and the second housing, reducing the impact of the separator on housing packaging, improving the yield rate of the electrochemical device, and reducing the impact of the quality issues of the electrochemical device on the electric device.

### BRIEF DESCRIPTION OF DRAWINGS

FIG. 1 is a schematic structural diagram of an electrochemical device according to an embodiment of this application.
FIG. 2 is a schematic structural diagram of an electrode assembly according to an embodiment of this application.
FIG. 3 is a partial view of a III-III section of the electrochemical device shown in FIG. 1.
FIG. 4 is a schematic structural diagram of an extended embodiment of the electrochemical device shown in FIG. 1.
FIG. 5 is a partial cross-sectional view of an extended embodiment of the electrochemical device shown in FIG. 1.
FIG. 6 is a schematic structural diagram of an electrode assembly disposed with a bonding member according to an embodiment of this application.
FIG. 7 is a structural cross-sectional view of a portion, packaged in a housing, of the electrode assembly disposed with a bonding member shown in FIG. 6.
FIG. 8 is a schematic structural diagram of an electric device according to an embodiment of this application.

### Reference signs of main components:

| | |
|---|---|
| Electrochemical device | 100 |
| Housing | 10 |
| First housing | 11 |
| First recess | 111 |
| First chamfer | 112 |
| Second housing | 12 |
| Second recess | 121 |
| Second chamfer | 122 |
| Accommodating space | 13 |
| Connection region | 14 |
| Electrolyte solution injection hole | 15 |
| Electrode assembly | 20 |
| First electrode plate | 21 |
| Second electrode plate | 22 |
| Separator | 23 |
| First electrode terminal | 24 |
| Second electrode terminal | 25 |
| First output terminal | 31 |
| Second output terminal | 32 |
| First region | 40 |
| First portion | 41 |
| Second portion | 42 |
| Bonding member | 50 |
| Second region | 60 |
| Third portion | 61 |
| Fourth portion | 62 |
| Electric device | 200 |
| First direction | X |

This application will be further described with reference to the accompanying drawings in the following specific embodiments.

### DETAILED DESCRIPTION

The following describes the technical solutions in embodiments of this application with reference to the accompanying drawings in the embodiments of this application. Apparently, the described embodiments are only some rather than all of the embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

The embodiments of this application provide an electrochemical device, including a housing and an electrode assembly. The housing includes a first housing and a second housing, where the first housing and the second housing are connected to each other to form an accommodating space. The electrode assembly is disposed within the accommodating space, where the electrode assembly includes a first electrode plate, a second electrode plate, and a separator disposed between the first electrode plate and the second electrode plate, the first electrode plate, the separator, and the second electrode plate are sequentially stacked along a first direction, the first direction is a thickness direction of the housing, and the first housing and the second housing are arranged opposite to each other along the first direction. Along the first direction, a projection of the second electrode plate is within a projection of the first electrode plate, the projection of the first electrode plate is within a projection of the separator, and the projection of the separator is within a projection of the accommodating space. Along a direction perpendicular to the first direction, the separator extends beyond the first electrode plate, and an end of a portion of the separator extending beyond the first electrode plate, together with the first housing and the second housing, enclose a first region.

In the above electrochemical device, the separator is disposed within the accommodating space of the housing, and the end of the portion of the separator extending beyond the first electrode plate and the second electrode plate, together with the first housing and the second housing, enclose the first region. This can prevent the separator from entering the connection region of the first housing and the second housing, reducing the impact of the separator on housing packaging, and improving the yield rate of the electrochemical device.

The following further describes the embodiments of this application with reference to the accompanying drawings.

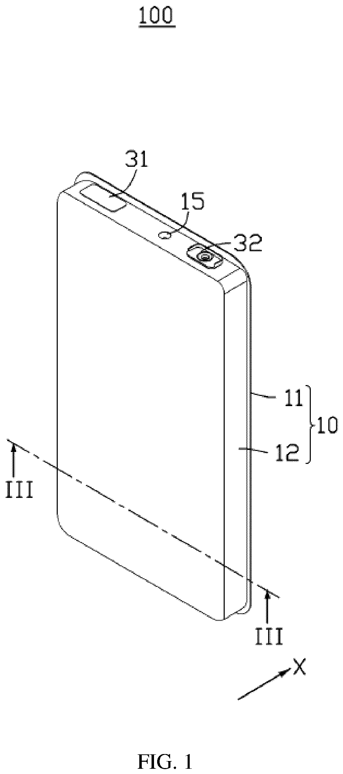

As shown in FIGs. 1, 2, and 3, embodiments of this application provide an electrochemical device 100, including a housing 10 and an electrode assembly 20, where the electrode assembly 20 is disposed within the housing 10. The electrode assembly 20 includes a first electrode plate 21, a second electrode plate 22, a separator 23, a first electrode terminal 24, and a second electrode terminal 25, where the separator 23 is disposed between the first electrode plate 21 and the second electrode plate 22, and the first electrode plate 21, the separator 23, and the second electrode plate 22 are sequentially stacked along a first direction X, where the first direction X is a thickness direction of the housing 10. The first electrode terminal 24 is electrically connected to the first electrode plate 21, and the second electrode terminal 25 is electrically connected to the second electrode plate 22. The first electrode terminal 24 and the second electrode terminal 25 are configured to electrically connect to external devices, enabling the electrochemical device 100 to charge and discharge.

In one embodiment, the housing 10 is provided with an electrolyte solution injection hole 15, where the electrolyte solution injection hole 15 is configured for injecting electrolyte solution into the housing 10 after the electrode assembly 20 is packaged within the housing 10.

In one embodiment, the electrochemical device 100 further includes a first output terminal 31 and a second output terminal 32, where the first output terminal 31 is electrically connected to the first electrode terminal 24 and exposed outside the housing 10, and the second output terminal 32 is electrically connected to the second electrode terminal 25 and exposed outside the housing 10. The first output terminal 31 and the second output terminal 32 are configured to electrically connect to external devices, enabling the electrochemical device 100 to charge and discharge.

In one embodiment, the electrochemical device 100 is a pouch battery. Optionally, the housing 10 includes an aluminum plastic film. In one embodiment, the electrochemical device 100 is a hard shell battery. Optionally, the housing 10 includes a steel housing. As an example, further description will be provided in the following with the electrochemical device 100 being a hard shell battery and the housing 10 including a steel housing.

In one embodiment, the first output terminal 31 is located on an outer surface of the housing 10 and is electrically connected to the housing 10. The first electrode terminal 24 is electrically connected to the first output terminal 31 through its electrical connection to the housing 10. In one embodiment, the first output terminal 31 is welded to the outer surface of the housing 10. In one embodiment, the first electrode terminal 24 is welded to an inner surface of the housing 10. In one embodiment, the first output terminal 31 is a nickel sheet.

In one embodiment, part of the second output terminal 32 is located within the housing 10 and connected to the second electrode terminal 25, and part of the second output terminal 32 is located outside the housing 10. The part of the second output terminal 32 located outside the housing 10 is configured to connect to external devices. The electrochemical device 100 further includes a second sealing member (not shown in the figure), where the second sealing member is connected to the second output terminal 32 and the housing 10, and the second sealing member can prevent the second output terminal 32 from coming into contact with the housing 10, thereby reducing the risk of a short circuit caused by the second output terminal 32 electrically connecting to the housing 10. In one embodiment, the second output terminal 32 is a pole.

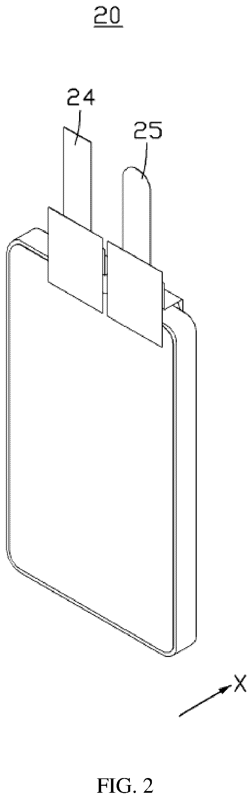

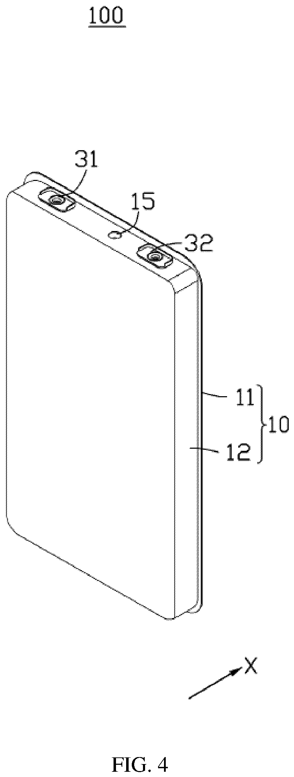

Referring to FIGs. 2 and 4, in one embodiment, part of the first output terminal 31 is located within the housing 10 and connected to the first electrode terminal 24, and part of the first output terminal 31 is located outside the housing 10. The part of the first output terminal 31 located outside the housing 10 is configured to connect to external devices. The electrochemical device 100 further includes a first sealing member (not shown in the figure), where the first sealing member is connected to the first output terminal 31 and the housing 10, and the first sealing member can prevent the first output terminal 31 from coming into contact with the housing 10, thereby reducing the risk of a short circuit caused by the first output terminal 31 electrically connecting to the housing 10. In one embodiment, the first output terminal 31 is a pole.

As an example, further description will be provided in the following with the first output terminal 31 being a nickel sheet and the second output terminal 32 being a pole.

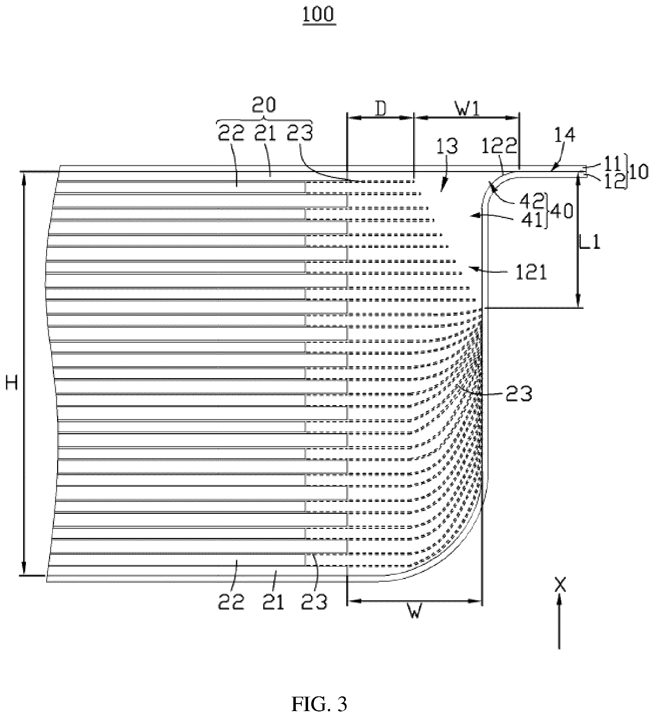

Referring to FIGs. 1 and 3, in one embodiment, one of the first electrode plate 21 and the second electrode plate 22 is a positive electrode plate, and the other is a negative electrode plate. As an example, further description will be provided in the following with the first electrode plate 21 being a negative electrode plate and the second electrode plate 22 being a positive electrode plate.

In one embodiment, the first electrode plate 21 includes a first current collector and a first active material layer, where the first active material layer is disposed on a surface of the first current collector. Optionally, the first current collector is made of copper foil. Optionally, the first active material layer is made of graphite.

In one embodiment, the second electrode plate 22 includes a second current collector and a second active material layer, where the second active material layer is disposed on a surface of the second current collector. Optionally, the second current collector is made of aluminum foil. Optionally, the second active material layer is made of lithium cobalt oxide.

The housing 10 includes a first housing 11 and a second housing 12, where the first housing 11 and the second housing 12 are opposite to each other arranged along the first direction X, and the first housing 11 and the second housing 12 are connected to each other to form an accommodating space 13. The electrode assembly 20 is disposed within the accommodating space 13.

In one embodiment, the first electrode plate 21, the separator 23, and the second electrode plate 22 are each provided in plurality, and one separator 23 is disposed between any adjacent first electrode plate 21 and second electrode plate 22. All the first electrode plates 21, separators 23, and second electrode plates 22 are stacked.

In one embodiment, along the first direction X, the electrode plate on the outermost side is the first electrode plate 21, and the first current collector of the first electrode plate 21 located on the outermost side is in contacting connection with the inner surface of the housing 10.

In one embodiment, the first electrode terminal 24 connects all the first electrode plates 21. In one embodiment, the second electrode terminal 25 is connected to all the second electrode plates 22.

Along the first direction X, a projection of the second electrode plate 22 is within a projection of the first electrode plate 21, which can reduce the risk of lithium precipitation.

Along the first direction X, the projection of the first electrode plate 21 is within a projection of the separator 23, and along the direction perpendicular to the first direction X, the separator 23 extends beyond the first electrode plate 21, which can reduce the risk of a short circuit between a first electrode plate 21 and an adjacent second electrode plate 22. In this application, the direction perpendicular to the first direction X refers to all directions on a plane perpendicular to the thickness direction of the housing 10.

Along the first direction X, the projection of the separator 23 is within a projection of the accommodating space 13. Along the direction perpendicular to the first direction X, ends of portions of a plurality of layers of separator 23 extending beyond the first electrode plate 21, together with the first housing 11 and the second housing 12, enclose a first region 40. The presence of the first region 40 can reduce the risk of the separator 23 entering the connection region 14 of the first housing 11 and the second housing 12, reducing the impact of the separator 23 on the housing 10 packaging, and improving the yield rate of the electrochemical device 100. In this application, the connection region 14 of the first housing 11 and the second housing 12 refers to the region where the first housing 11 and the second housing 12 are in contact with each other. When packaging the housing 10, the first housing 11 and the second housing 12 are usually sealingly connected in the connection region 14 of the first housing 11 and the second housing 12. If part of the separator 23 enters the sealingly connected region of the first housing 11 and the second housing 12, it may cause failure in the sealing of the housing 10, resulting in the scrapping of the electrochemical device 100.

In one embodiment, the first region 40 includes a first portion 41 and a second portion 42. Along the first direction X, a projection of the first portion 41 is within the projection of the separator 23, and a projection of the second portion 42 is outside the projection of the separator 23.

In one embodiment, using electrode assembly 20 as the object of illustration, along the direction perpendicular to the first direction X, the first portion 41 is formed by the ends of the plurality of layers of separator 23 being recessed along a direction approaching the first electrode plate 21 and the second electrode plate 22. In one embodiment, the first portion 41 is formed by shaping part of the separators 23. Specifically, after all the first electrode plates 21, separators 23, and second electrode plates 22 are stacked, a shaping process is used to form recessed notches at the ends of part of the separators 23, thereby forming the first portion 41. In one embodiment, the shaping process for the separator 23 includes but is not limited to hot stamping, laser cutting, and mechanical cutting.

In one embodiment, the second portion 42 is formed in the chamfered part of the first housing 11 and/or the second housing 12. Along the direction perpendicular to the first direction X, one side of the second portion 42 is the first portion 41, and another side of the second portion 42 is the connection region 14 of the first housing 11 and the second housing 12.

In one embodiment, along the first direction X, a length of the first region 40 is L1 (that is, a maximum length of the first region in the first direction), where L1 > 0. Along the direction perpendicular to the first direction X, a width of the first region 40 is W1 (that is, a maximum width of the first region along the direction perpendicular to the first direction), where W1 > 0.

In one embodiment, along the first direction X, the maximum width of the first region 40 is at the connection region 14 of the first housing 11 and the second housing 12, which can further reduce the risk of the separator 23 entering the connection region 14. Moreover, along the first direction X, starting from a connection region 14 of the first housing 11 and the second housing 12 and extending along a direction away from the connection region 14, the width of the first region 40 gradually decreases until it reaches zero, allowing the ends of part of the separators 23 to abut against the first housing 11 and/or the second housing 12, reducing a risk of relative displacement between the electrode assembly 20 and the housing 10, and improving the anti-vibration performance of the electrochemical device 100.

In one embodiment, along the first direction X, a length of the accommodating space 13 is H, where H ≥ 2 * L1, which allows more separators 23 to abut against the first housing 11 and/or the second housing 12, reducing the risk of relative displacement between the electrode assembly 20 and the housing 10, and improving the anti-vibration performance of the electrochemical device 100. In one embodiment, H/3 ≤ L1 ≤ H/2. Optionally, L1 = H/3.

In one embodiment, along the direction perpendicular to the first direction X, a minimum distance between the first portion 41 and the first electrode plate 21 is D, where D ≥ 0.45 mm, allowing the portions of the separators 23 extending beyond the first electrode plate 21 to have an insulating effect, reducing the risk of a short circuit between a first electrode plate 21 and an adjacent second electrode plate 22. In one embodiment, the minimum distance D between the first portion 41 and the first electrode plate 21 is a safety length by which the separator 23 extends beyond the first electrode plate 21. Optionally, a value of D is one of 0.45 mm, 0.5 mm, and 0.55 mm.

In one embodiment, along the direction perpendicular to the first direction X, a maximum length by which the separator 23 extends beyond the first electrode plate 21 is W, where W > D and W > 2 * W1, reducing the impact of the first region 40 on the safety length by which the separator 23 extends beyond the first electrode plate 21.

In one embodiment, the second housing 12 has a second recess 121, and the first housing 11 covers the second housing 12, thereby forming the accommodating space 13 with the second recess 121. Along the direction perpendicular to the first direction X, projections of the accommodating space 13 and the first region 40 are within the projection of the second housing 12, and the ends of part of the separators 23 abut against the second housing 12. In one embodiment, the part of the second housing 12 located between the accommodating space 13 and the connection region 14 has a second chamfer 122. Along the first direction X, the second portion 42 is located between the second chamfer 122 and the first housing 11. In one embodiment, the second chamfer 122 is rounded, which can reduce the impact of the second chamfer 122 on the separator 23, and reduce a risk of the second chamfer 122 piercing the separator 23.

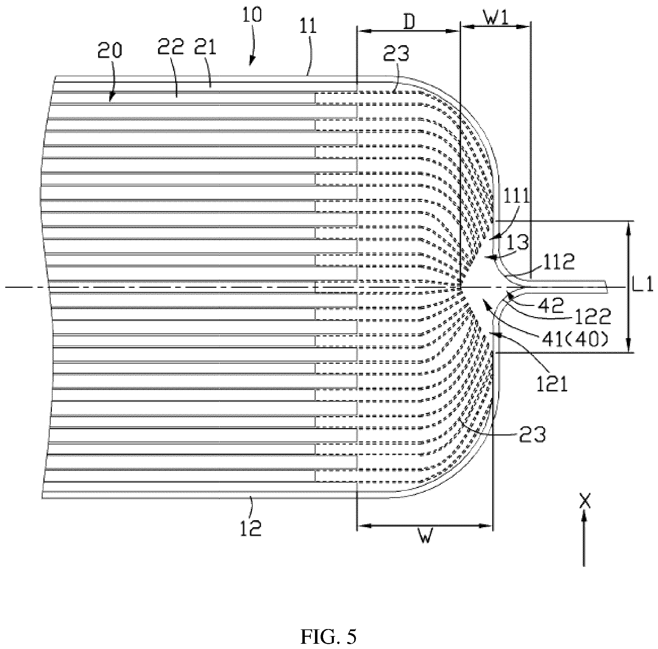

As shown in FIG. 5, in one embodiment, the first housing 11 has a first recess 111, and the second housing 12 has a second recess 121. The first housing 11 and the second housing 12 are snap-fitted to form the accommodating space 13. Along the direction perpendicular to the first direction X, a portion of the projection of the accommodating space 13 is within the projection of the first housing 11, and another portion of the projection of the accommodating space 13 is within the projection of the second housing 12. A portion of the projection of the first region 40 is within the projection of the first housing 11, and another portion of the projection of the first region 40 is within the projection of the second housing 12. In one embodiment, the part of the first housing 11 located between the first recess 111 and the connection region 14 has a first chamfer 112, and the part of the second housing 12 located between the second recess 121 and the connection region 14 has a second chamfer 122. Along the first direction X, the second portion 42 is located between the first chamfer 112 and the second chamfer 122.

In one embodiment, the first chamfer 112 is rounded, which can reduce the impact of the first chamfer 112 on the separator 23, and reduce a risk of the first chamfer 112 piercing the separator 23. In one embodiment, the second chamfer 122 is rounded, which can reduce the impact of the second chamfer 122 on the separator 23, and reduce the risk of the second chamfer 122 piercing the separator 23.

As an example, further description will be provided in the following with the first housing 11 covering the second housing 12 and the second recess 121 forming the accommodating space 13.

Referring to FIG. 3, in one embodiment, along the direction perpendicular to the first direction X, the separators 23 abutting against the second housing 12 are in a state of being compressed and deformed, which can further improve the stability of the connection between the electrode assembly 20 and the housing 10, reducing the risk of relative displacement between the electrode assembly 20 and the housing 10, and improving the anti-vibration performance of the electrochemical device 100.

In one embodiment, along the first direction X, the portions of the separators 23 compressed and deformed by the second housing 12 all bend toward the second portion 42. Along the direction perpendicular to the first direction X, the plurality of separators 23 in the bent region are sequentially stacked, which can reduce the risk of the ends of the first electrode plate 21 and the second electrode plate 22 piercing part of the separators 23 and then coming into contact with the housing 10 to cause a short circuit, improving the safety performance of the electrochemical device 100.

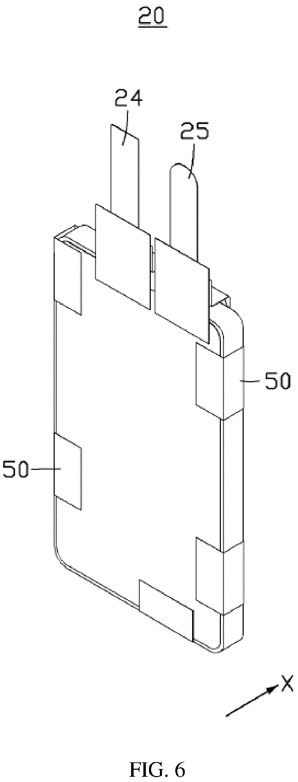

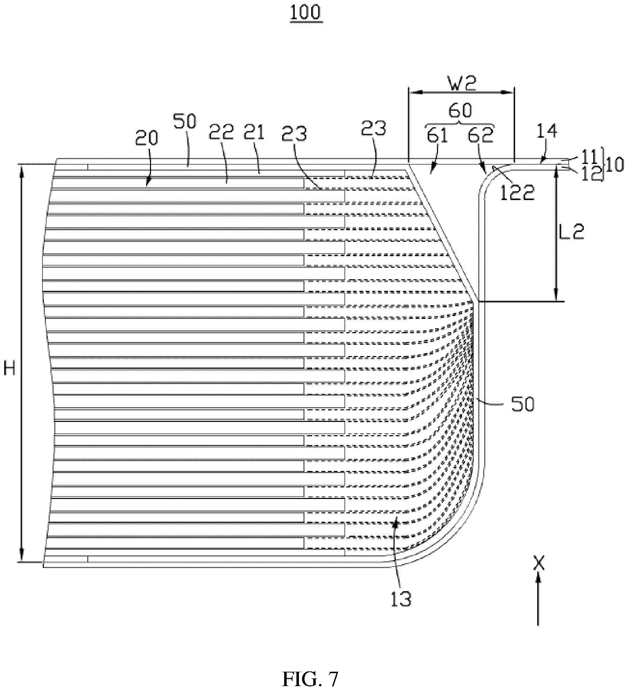

As shown in FIGs. 6 and 7, in one embodiment, the electrochemical device 100 further includes a bonding member 50, where one end of the bonding member 50 is connected to one side of the electrode assembly 20 along the first direction X, and an opposite end of the bonding member 50 is connected to another side of the electrode assembly 20 along the first direction X. The bonding member 50 can increase the connection tightness of the electrode assembly 20 along the first direction X, reducing a risk of relative displacement between the first electrode plate 21, the separator 23, and the second electrode plate 22, improving the anti-vibration performance of the electrode assembly 20, and improving the anti-vibration performance of the electrochemical device 100. Optionally, the bonding member 50 is insulating adhesive tape.

In one embodiment, the bonding members 50 is provided in plurality, and the plurality of bonding members 50 are spaced apart from each other along a circumferential direction of the electrode assembly 20, fastening the electrode assembly 20 at multiple positions, further improving the anti-vibration performance of the electrode assembly 20, and improving the anti-vibration performance of the electrochemical device 100.

In one embodiment, along the direction perpendicular to the first direction X, an end of the separator 23 abuts against the bonding member 50, which can prevent the bonding member 50 from loosening, thereby reducing the risk of relative displacement between the first electrode plate 21, the separator 23, and the second electrode plate 22.

Referring to FIGs. 3 and 6, in one embodiment, along the first direction X, a projection of the bonding member 50 is within the projection of the accommodating space 13. The bonding member 50, together with the first housing 11 and the second housing 12, enclose a second region 60, and the second region 60 is within the first region 40. This can reduce a risk of the bonding member 50 entering the connection region 14, reducing the impact of the bonding member 50 on the housing 10 packaging, and improving the yield rate of the electrochemical device 100.

In one embodiment, the second region 60 includes a third portion 61 and a fourth portion 62, where the third portion 61 constitutes part of the first portion 41, and the fourth portion 62 is the same as the second portion 42. Along the first direction X, a projection of the third portion 61 is within the projection of the bonding member 50, and a projection of the fourth portion 62 is outside the projection of the bonding member 50.

In one embodiment, after all the first electrode plates 21, separators 23, and second electrode plates 22 are stacked, a shaping process is used to form recessed notches at the ends of part of the separators 23. After the electrode assembly 20 is placed into the housing 10, the recessed notches formed at the ends of the separators 23 constitute the first portion 41, and after the bonding member 50 is attached to the electrode assembly 20, the third portion 61 is formed within the first portion 41.

The fourth portion 62 is the same as the second portion 42, and details are not repeated herein.

In one embodiment, along the first direction X, a length of the second region 60 is L2, where L2 > 0. Along the direction perpendicular to the first direction X, a width of the second region 60 is W2, where W2 > 0.

In one embodiment, along the first direction X, the second region 60 has a maximum width at the connection region 14 of the first housing 11 and the second housing 12, which can further reduce the risk of the separator 23 and/or the bonding member 50 entering the connection region 14. Moreover, along the first direction X, starting from the connection region 14 of the first housing 11 and the second housing 12 and extending along a direction away from the connection region 14, the width of the second region 60 gradually decreases until it reaches zero, allowing the ends of part of the bonding members 50 to abut against the second housing 12, reducing a risk of relative displacement between the electrode assembly 20 and the housing 10, and improving the anti-vibration performance of the electrochemical device 100.

In one embodiment, L2 ≤ H/2, which allows more bonding members 50 to abut against the second housing 12, reducing the risk of relative displacement between the electrode assembly 20 and the housing 10, and improving the anti-vibration performance of the electrochemical device 100. In one embodiment, H/3 ≤ L2 ≤ H/2. Optionally, L2 = H/3.

In one embodiment, along the direction perpendicular to the first direction X, the separators 23 abutting against the bonding member 50 are in a state of being compressed and deformed, which can further improve the stability of the connection between the first electrode plate 21, the separator 23, and the second electrode plate 22, reducing the risk of relative displacement between the first electrode plate 21, the separator 23, and the second electrode plate 22, improving the anti-vibration performance of the electrode assembly 20, and improving the anti-vibration performance of the electrochemical device 100.

In one embodiment, along the first direction X, the portions of the separators 23 compressed and deformed by the bonding members 50 all bend toward the fourth portion 62. Along the direction perpendicular to the first direction X, the plurality of separators 23 in the bent region are sequentially stacked, which can reduce the risk of the ends of the first electrode plate 21 and the second electrode plate 22 piercing part of the separators 23 and bonding members 50 and then coming into contact with the housing 10 to cause a short circuit, improving the safety performance of the electrochemical device 100.

In summary, in the electrochemical device 100 of this application, the separator 23 is disposed within the accommodating space 13 of the housing 10, and the end of the portion of the separator 23 extending beyond the first electrode plate 21 and the second electrode plate 22, together with the first housing 11 and the second housing 12, enclose the first region 40. This prevents the separator 23 from entering the connection region 14 of the first housing 11 and the second housing 12, reducing the impact of the separator 23 on the housing 10 packaging, and improving the yield rate of the electrochemical device 100.

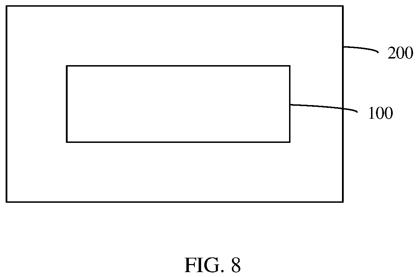

As shown in FIG. 8, embodiments of this application further provide an electric device 200, which includes the electrochemical device 100 according to any of the above embodiments. The electrochemical device 100 can provide power for the electric device 200.

In one embodiment, the electric device 200 includes but is not limited to mobile phones, computers, tablets, digital cameras, drones, and new energy vehicles.

When the electric device 200 of this application adopts the electrochemical device 100 according to any of the above embodiments, the impact of the electrochemical device 100 on the electric device 200 due to quality issues can be reduced.

In addition, persons skilled in the art can also make other changes within the spirit of this application. Certainly, these changes made according to the spirit of this application shall fall within the scope of this application.

## Claims

1. An electrochemical device, comprising:
a housing comprising a first housing and a second housing, wherein the first housing and the second housing are connected to each other to form an accommodating space; and
an electrode assembly disposed within the accommodating space; wherein the electrode assembly comprises a first electrode plate, a second electrode plate, and a separator disposed between the first electrode plate and the second electrode plate; the first electrode plate, the separator, and the second electrode plate are sequentially stacked along a first direction, the first direction is a thickness direction of the housing, and the first housing and the second housing are arranged opposite to each other along the first direction; wherein
along the first direction, a projection of the second electrode plate is within a projection of the first electrode plate, the projection of the first electrode plate is within a projection of the separator, and the projection of the separator is within a projection of the accommodating space; and
along a direction perpendicular to the first direction, the separator extends beyond the first electrode plate, and an end of a portion of the separator extending beyond the first electrode plate, together with the first housing and the second housing, enclose a first region.

2. The electrochemical device according to claim 1, wherein
along the first direction, at least part of a projection of the first region is within the projection of the separator, and a length of the first region is L1, wherein L1 > 0; and
along the direction perpendicular to the first direction, a width of the first region is W1, wherein W1 > 0.

3. The electrochemical device according to claim 2, wherein
along the first direction, starting from a connection region of the first housing and the second housing and extending along a direction away from the connection region, the width W1 of the first region gradually decreases; and
along the direction perpendicular to the first direction, a maximum length by which the separator extends beyond the first electrode plate is W, wherein W > 2 * W1.

4. The electrochemical device according to claim 2, wherein along the first direction, a length of the accommodating space is H, wherein H ≥ 2 * L1.

5. The electrochemical device according to claim 1, wherein along the direction perpendicular to the first direction, a minimum distance between the first region and the first electrode plate is D, wherein D ≥ 0.45 mm.

6. The electrochemical device according to claim 1, wherein along the direction perpendicular to the first direction, the separator is connected to the first housing and/or the second housing.

7. The electrochemical device according to claim 1, further comprising a bonding member, wherein one end of the bonding member is connected to one side of the electrode assembly along the first direction, and an opposite end of the bonding member is connected to another side of the electrode assembly along the first direction; wherein
along the direction perpendicular to the first direction, an end of the separator abuts against the bonding member;
along the first direction, a projection of the bonding member is within the projection of the accommodating space; and
the bonding member, together with the first housing and the second housing, enclose a second region, and the second region is within the first region.

8. The electrochemical device according to claim 7, wherein along the direction perpendicular to the first direction, a projection of the second region is within the projection of the bonding member, and part of the bonding members abut against the first housing and/or the second housing.

9. The electrochemical device according to claim 7, wherein
the first electrode plate, the separator, and the second electrode plate are each provided in plurality, and at least one separator is disposed between any adjacent first electrode plate and second electrode plate; and
along the first direction, at each of two sides of the electrode assembly is the first electrode plate, and two ends of the bonding member are respectively connected to the first electrode plates at the two sides of the electrode assembly.

10. An electric device, comprising the electrochemical device according to any one of claims 1 to 9.
